# EUROPÄISCHE PATENTSCHRIFT

(11) **EP 0 694 460 B1**
(45) Veröffentlichungstag und Bekanntmachung des Hinweises auf die Patenterteilung: **15.10.1997**
(21) Anmeldenummer: 95109897.9
(22) Anmeldetag: 24.06.1995
(51) Int. Cl.: B60S 9/10, B66C 23/78

(54) **Abstützeinrichtung für ein Lastfahrzeug**
Support for a commercial vehicle
Dispositif de support pour un véhicule utilitaire

(30) Priorität: 01.07.1994 AT 155/94 U
(43) Veröffentlichungstag der Anmeldung: 31.01.1996
(73) Patentinhaber: Palfinger Aktiengesellschaft, A-5010 Bergheim/Salzburg (AT)
(72) Erfinder: Markus, Enzinger, A-5020 Salzburg (AT)
(74) Vertreter: Torggler, Paul, Dr.

(56) Entgegenhaltungen:
- DE-A- 4 311 662
- DE-U- 9 301 898

## Beschreibung

Die Erfindung betrifft eine Abstützeinrichtung für ein Lastfahrzeug, bei welcher nach unten ausfahrbare Stützen an horizontal verlaufenden Balken angeordnet sind, wobei jeder Balken im Funktionszustand aus einem Gehäuse über die Seitenbegrenzung des Fahrzeuges herausgezogen und während der Fahrt in das Gehäuse eingeschoben und in diesem Zustand verriegelt ist.

Wurde vergessen, den Balken im Gehäuse zu verriegeln oder löst sich die Verriegelung, so besteht die Möglichkeit, daß der Balken in einer Kurve durch die Zentrifugalkraft aus dem Gehäuse gezogen wird. Wird dies nicht sofort bemerkt, kann es zu gefährlichsten Unfällen kommen.

Zur Vermeidung des dargestellten Nachteils ist erfindungsgemäß vorgesehen, daß mit dem Balken eine Anzeigevorrichtung verbunden ist, welche über das Ende des Balkens nach außen vorragt (Signalstellung), wenn dieser nicht mit dem Gehäuse verriegelt ist.

Da die Anzeigevorrichtung seitlich vorragt, kann sie vom Fahrer im Rückspiegel gesehen werden, wobei es sinnvoll ist, die Aufmerksamkeit des Fahrers durch eine auffallende Ausgestaltung der Anzeigevorrichtung zu unterstützen. Dadurch daß die Anzeigevorrichtung im Rückspiegel sichtbar ist, erübrigt sich eine Überwachung des Verriegelungszustandes durch Fühler und die Übertragung der diesbezüglichen Information über elektrische Leitungen in den Führerstand.

Eine einfache konstruktive Ausführung der Erfindung wird möglich, wenn die Anzeigevorrichtung als Hebel ausgebildet ist, durch dessen Verschwenkung die Verriegelung zwischen Balken und Gehäuse hergestellt bzw. gelöst wird. Dabei ist sicherzustellen, daß der Hebel sich dann, und nur dann, in der Signalstellung befindet, wenn der Balken mit dem Gehäuse nicht verriegelt ist. Dies könnte beispielsweise dadurch erfolgen, daß der Hebel dauernd in Richtung der Signalstellung federbelastet ist, und wenn er gegen die Federwirkung nach oben verschwenkt wird, nur mittels des Riegels, welcher Balken und Gehäuse verbindet, in der unwirksamen oberen Stellung fixierbar ist.

Aus konstruktiven Gründen kann es allerdings zweckmäßig sein, die Verriegelung zwischen Balken und Gehäuse einerseits und die Fixierung des Hebels in der Signalstellung durch verschiedene Elemente zu verwirklichen. Dies wird anschließend anhand der Zeichnung an einem Ausführungsbeispiel gezeigt.

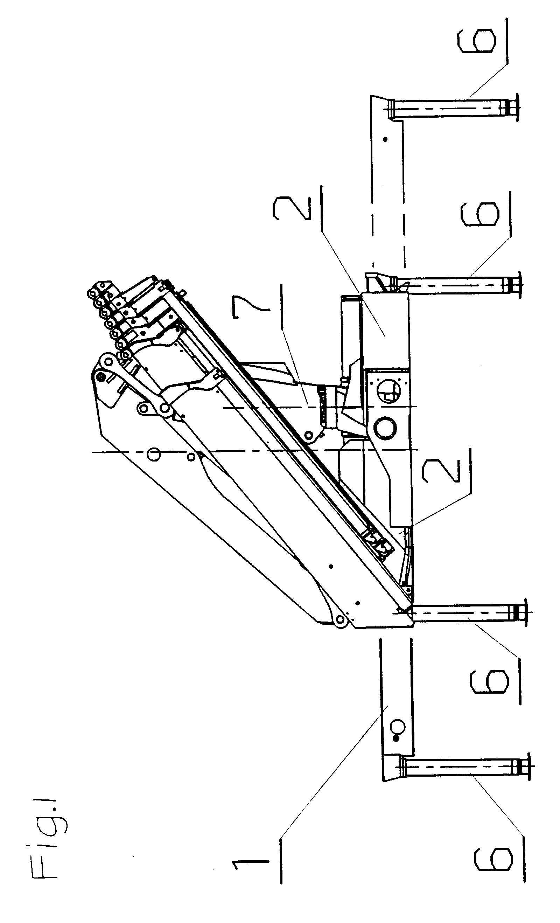

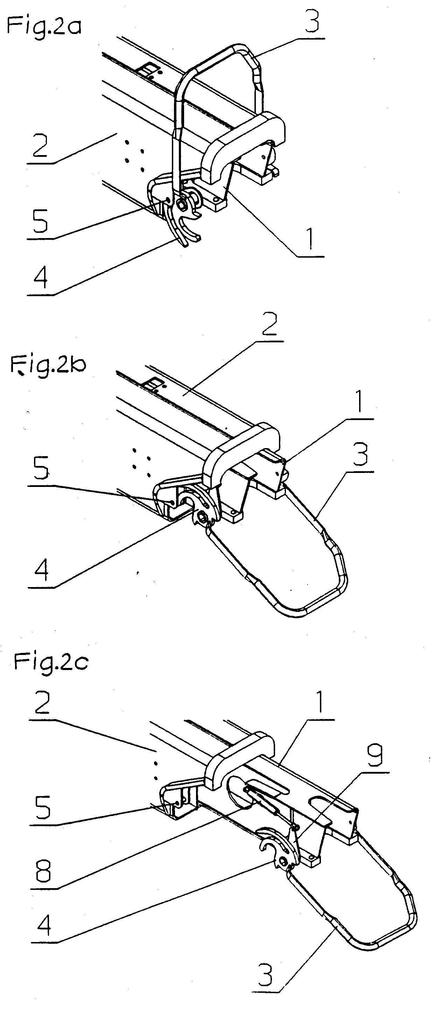

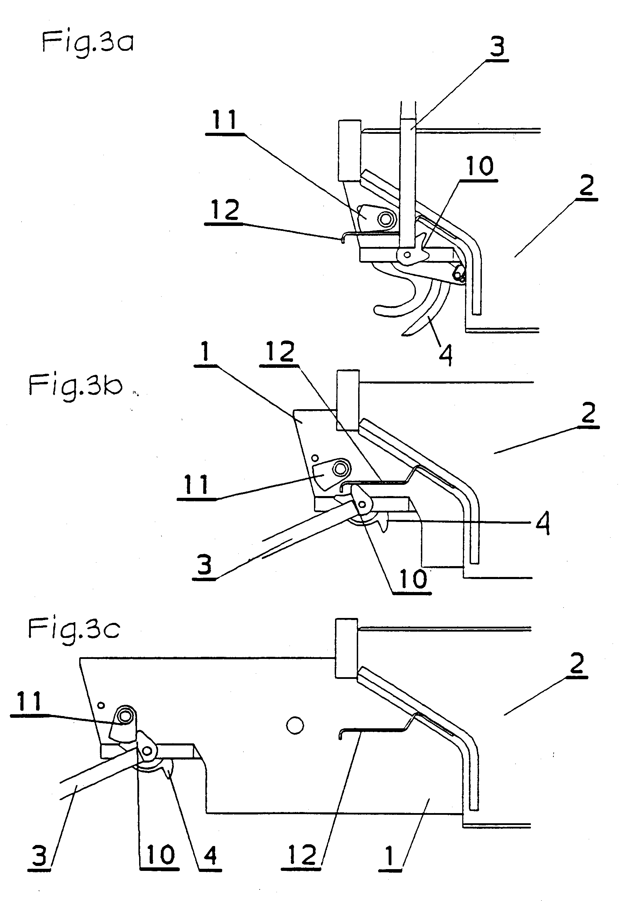

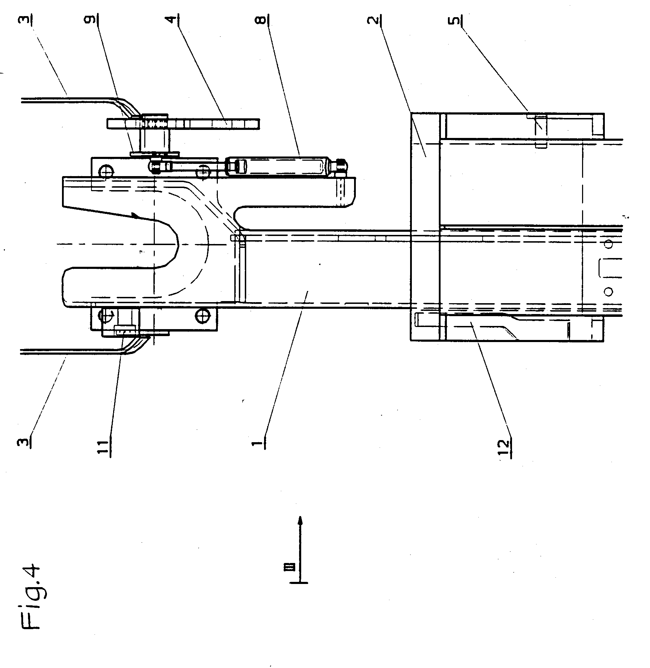

Fig. 1 ist die Ansicht eines Ladekrans samt Abstützung, gesehen in Fahrzeuglängsrichtung, Fig. 2a - 2c zeigt schaubildlich die Verriegelung von Balken und Gehäuse in drei Bewegungsstadien, Fig. 3a - 3c entspricht Fig. 2a - 2c gesehen in Richtung des Pfeiles III in Fig. 4. Fig. 4 ist eine Ansicht von oben entsprechend der Situation in Fig. 2c und Fig. 3c.

Wie aus Fig. 1 hervorgeht, befindet sich an der Unterseite eines Ladekrans 7 ein quer zur Richtung des nicht dargestellten Lastfahrzeuges verlaufendes Gehäuse 2, an welches während der Fahrt des Lastfahrzeuges beidseits Stützen 6 anschließen. Diese Stützen 6 können im Fahrbetrieb auch hochgeschwenkt sein, wesentlich ist jedoch, daß sie nicht über das Profil des Fahrzeuges nach außen vorragen. Im Betriebszustand des Ladekrans befinden sich die Stützen 6, wie ebenfalls aus Fig. 1 ersichtlich ist, im Abstand vom Gehäuse 2, was durch Ausfahren der Balken 1 bewirkt wird. Die Stützen 6 sind teleskopartig aufgebaut und können nach unten ausgefahren werden, bis sie den Kran sicher am Boden abstützen und die über die Last in den Kran eingeleiteten Kräfte somit vom Fahrzeug selbst fernhalten.

Aus Fig. 2a - 2c geht die Verriegelung von Balken 1 und Gehäuse 2 hervor. Sie erfolgt dadurch, daß der am Balken 1 schwenkbar gelagerte bügelförmige Hebel 3 mit einer Klaue 4 in einen Zapfen 5 eingreift, welcher seitlich im Gehäuse 2 angeordnet ist. Um die Verriegelung zu öffnen, ist der Bügel 3 in die Lage nach Fig. 2b zu verschwenken, wobei aufgrund der Klauenform der Balken 1 bereits nach außen wandert. Fig. 2c zeigt Balken 1 und Gehäuse 2 bereits getrennt voneinander. In dieser Lage wird auch eine Luftfeder 8 sichtbar, welche über einen Hebel 9 auf den Bügel 3 einwirkt. Das Gestänge 8,9 weist einen Totpunkt auf, sodaß die Luftfeder 8 den Bügel 3 einerseits in der Lage nach Fig. 2a und andererseits in der Lage nach Fig. 2c festhält. Der Bügel 3 ist in kräftiger Signalfarbe gestrichen, sodaß er in der Lage nach Fig. 2b oder Fig. 2c für den Fahrer des Lastkraftwagens sichtbar ist.

Fig. 3a - 3c zeigt eine Möglichkeit, zu verhindern, daß der Bügel 3 in die unwirksame obere Stellung verschwenkt wird, ohne daß es gleichzeitig zur Verriegelung von Balken 1 und Gehäuse 2 kommt. Bügel 3 und Balken 1 sind zu diesem Zwecke dauernd in der unteren (Signal-)Stellung mittels eines Rastgliedes 11 und der am Hebel 3 vorgesehenen Rastkerbe 10 verrastet. Erst wenn sich der Balken 1 so weit an das Gehäuse 2 genähert hat, daß die Klaue 4 vor dem Zapfen 5 liegt, öffnet der am Gehäuse 2 befestigte Entriegelungsteil 12 die Verrastung 10,11 (vgl. Fig. 3b) und hält sie immer dann geöffnet (vgl. Fig. 3a), wenn der Zapfen 5 von der Klaue 4 umfaßt wird.

## Patentansprüche

1. Abstützeinrichtung für ein Lastfahrzeug, bei welcher nach unten ausfahrbare Stützen (6) an horizontal verlaufenden Balken (1) angeordnet sind, wobei jeder Balken im Funktionszustand aus einem Gehäuse (2) über die Seitenbegrenzung des Fahrzeuges herausgezogen und während der Fahrt in das Gehäuse (2) eingeschoben und in diesem Zustand verriegelt ist, dadurch gekennzeichnet, daß mit dem Balken (1) eine Anzeigevorrichtung verbunden ist, welche über das Ende des Balkens (1) nach außen vorragt (Signalstellung), wenn dieser nicht mit dem Gehäuse (2) verriegelt ist.

2. Abstützeinrichtung nach Anspruch 1, dadurch gekennzeichnet, daß die Anzeigevorrichtung als Hebel (3) ausgebildet ist, durch dessen Verschwenkung die Verriegelung zwischen Balken (1) und Gehäuse (2) hergestellt bzw. gelöst wird.

3. Abstützeinrichtung nach Anspruch 2, dadurch gekennzeichnet, daß zur Verriegelung zwischen Balken (1) und Gehäuse (2) eine am Hebel (3) angeordnete Klaue (4) dient, welche einen Zapfen (5) am Gehäuse (2) umfaßt.

4. Abstützeinrichtung nach Anspruch 2 oder 3, dadurch gekennzeichnet, daß der Hebel (3) federbelastet ist.

5. Abstützeinrichtung nach einem der Ansprüche 2 bis 4, dadurch gekennzeichnet, daß der Hebel (3) in der Signalstellung durch ein Rastglied (11) fixiert ist, welches in der die Verriegelung von Balken (1) und Gehäuse (2) ermöglichenden Lage des Balkens (1) durch einen am Gehäuse (2) angeordneten Entriegelungsteil gelöst wird.

## Claims

1. A support arrangement for a goods vehicle, in which downwardly extendable supports (6) are arranged on horizontally extending beams (1), wherein in the operational condition each beam projects out of a housing (2) beyond the side boundary of the vehicle and is pushed into the housing (2) while the vehicle is moving and is locked in that condition, characterised in that connected to the beam (1) is an indicator device which projects outwardly beyond the end of the beam (1) (signal position) when the beam is not locked to the housing (2).

2. A support arrangement according to claim 1 characterised in that the indicator device is in the form of a lever (3), the pivotal movement of which engages or releases the locking action between the beam (1) and the housing (2).

3. A support arrangement according to claim 2 characterised in that a claw (4) which is arranged on the lever (3) and which embraces a projection (5) on the housing (2) serves for the locking action between the beam (1) and the housing (2).

4. A support arrangement according to claim 2 or claim 3 characterised in that the lever (3) is spring-loaded.

5. A support arrangement according to one of claims 2 to 4 characterised in that the lever (3) is fixed in the signal position by a retaining member (11) which in the position of the beam (1) which permits the locking action between the beam (1) and the housing (2) is released by an unlocking portion arranged on the housing (2).

## Revendications

1. Dispositif d'appui pour un véhicule lourd dans lequel des béquilles (6) pouvant être déployées vers le bas sont disposées sur des poutres (1) s'étendant horizontalement, chaque poutre étant, en position de fonctionnement, tirée hors d'un boîtier (2) au-delà de la limite latérale du véhicule et étant, pendant le déplacement, rentrée dans le boîtier (2) et verrouillée dans cette position, caractérisé en ce qu'un dispositif indicateur est relié à la poutre (1), lequel dispositif indicateur dépasse vers l'extérieur de l'extrémité de la poutre (1) (position de signalisation) lorsque celle-ci n'est pas verrouillée avec le boîtier (2).

2. Dispositif d'appui selon la revendication 1, caractérisé en ce que le dispositif indicateur est réalisé sous la forme d'un levier (3) dont le pivotement établit et supprime le verrouillage entre la poutre (1) et le boîtier (2).

3. Dispositif d'appui selon la revendication 2, caractérisé en ce que le verrouillage entre la poutre (1) et le boîtier (2) s'effectue au moyen d'une griffe (4) qui est disposée sur le levier (3) et entoure un téton (5) sur le boîtier (2).

4. Dispositif d'appui selon la revendication 2 ou 3, caractérisé en ce que le levier (3) est sollicité par ressort.

5. Dispositif d'appui selon l'une des revendications 2 à 4, caractérisé en ce que le levier (3) est bloqué dans la position de signalisation par un élément d'arrêt (11) qui dans la position de la poutre (1) permettant le verrouillage de la poutre (1) et du boîtier (2), est débloqué par un élément de déverrouillage disposé sur le boîtier (2).
